# EUROPEAN PATENT APPLICATION

(11) **EP 2 735 441 A2**
(43) Date of publication of application: **28.05.2014**
(21) Application number: 12814766.7
(22) Date of filing: 20.07.2012
(51) Int. Cl.: B32B 15/088, B32B 15/20, B65D 85/88, H01M 2/02, H01M 10/02

(54) **BATTERY PACKAGING MATERIAL HAVING HEAT-DISSIPATING CHARACTERISTICS**

(30) Priority: 21.07.2011 KR 20110072494; 20.07.2012 KR 20120079255
(71) Applicant: Hanwha Chemical Corporation, Seoul 100-220 (KR)
(72) Inventor: YOON, Jong Woon, Daejeon 302-170 (KR); KIM, Ki Hong, Daejeon 302-773 (KR); KIM, Jeong Gyoum, Daejeon 302-120 (KR); KIM, Hong Keon, Daejeon 305-770 (KR)
(74) Representative: Tischner, Oliver
(86) International application number: PCT/KR2012/005825
(87) International publication number: WO 2013/012291

(57) **Abstract**

The present invention relates to a packaging material for a battery including a deposited body consisting of an outermost layer, a barrier layer, and an innermost layer, wherein a heat dissipation layer consisting of a carbon material or a mixture of a carbon material and a resin is formed to afford a slip property, flame resistance, printability, and the like as well as a heat dissipation property to the packaging material. The present invention also relates to a packaging material for a battery having a heat dissipation function, containing a carbon material in at least one layer of the above layers.

## Description

### [TECHNICAL FIELD]

The present invention relates to a packaging material for a battery having a heat dissipation property, and more particularly to a packaging material for a battery including a heat dissipation layer that is prepared by adding a carbon material to at least one constitutional layer of the packaging material, or a separate heat dissipation layer containing a carbon material and a binder resin.

### [BACKGROUND OF ART]

Since a lithium ion secondary battery uses a liquid electrolyte, it uses an aluminum can as a packaging material to prevent leakage of the electrolyte and decrease a risk of explosion. Thus, a lithium ion secondary battery inevitably has a heavy weight and a large volume due to the aluminum can that is used as the packaging material, and even if the aluminum can is used, a risk of explosion always exists because the liquid electrolyte in ion state is used, and thus safety is low. Accordingly, research and development for improving safety and further increasing energy density while decreasing volume are ongoing.

Recently, as a battery compensating the disadvantages of a lithium ion secondary battery, a lithium polymer secondary battery has been under development. Since the lithium polymer secondary battery may include a pouch-type exterior material, the battery may be reduced in weight, thereby reducing production cost and diversifying the shape of the battery, thus increasing product competiveness. Since the lithium polymer secondary battery uses a laminate pouch as a packaging material, it may become thinner. The polymer battery may be used in a notebook, portable terminal equipment (a mobile phone, a PDA, and the like), a video camera, an electric vehicle, a storage battery for storing energy, a robot, a satellite, and the like.

Since the conventional battery packaging material has been applied only for small batteries, problems due to heat generated from the battery itself have been insignificant, but as the application field of batteries is expanded and the size of batteries becomes large, heat generated by batteries and exposure to external heat also increase, thus raising safety problems of batteries.

The existing battery external packaging material consists of a base film formed of a polyester-based resin or a polyamide-based resin/a barrier layer formed of an aluminum alloy/an innermost layer formed of polyolefin-based resin.

Korean Laid-Open Patent Publication No. 2008-0078160 aims to inform of risk as the color of the packaging material changes according to a change in external temperature and internal temperature of a battery, but it has a limitation in delaying or inhibiting the risk because the packaging material does not have a function for blocking or discharging heat when it is exposed to abnormal temperatures.

Korean Laid-Open Patent Publication No. 2006-0034130 and Japanese Registered Patent No. 4541961 describe a packaging material consisting of a heat dissipation layer, a metal layer, and a polypropylene layer, but it has a limitation as a packaging material when long term reliability as a packaging material such as durability for over 3 years, weather resistance, mechanical strength, corrosion resistance, and the like should be secured, because a functional coating layer of aluminum, a barrier layer to oxygen and moisture, a film layer compensating mechanical strength, and the like are not included, and it may have a limitation in conducting a wide range of drawing operations due to inadequate functional additives that can influence the coefficient of friction of the internal/external surface of the packaging material. Under the circumstances that battery size becomes diversified and the application range becomes broadened, there is a need for a multifunctional packaging material that can reduce the above risk factors.

### [DETAILED DESCRIPTION OF THE INVENTION]

### [Technical Problem]

Accordingly, as the result of extensive studies, it was found that when the internal temperature of a battery rapidly increases according to an internal short circuit or overcharge due to an extraordinary reaction inside a polymer battery such as a lithium secondary battery or a portable storage battery, or it is exposed to a severe external environment such as heat, an increase in the internal temperature of the battery may be primarily delayed and inhibited by heat dissipation of a battery packaging material by a carbon material, and the invention was completed.

Therefore, it is an object of the invention to provide a packaging material for a polymer battery that has an excellent heat dissipation property as well as excellent formability and chemical resistance, and that may secure stability and reliability of a battery.

### [Technical Solution]

In order to achieve the above object, the present invention provides a pouch-type packaging material for a battery, including a heat resistant resin outermost layer, a barrier layer containing aluminum or an aluminum alloy, and a thermoplastic resin innermost layer, wherein the packaging material for a battery includes a heat dissipation layer that is prepared by adding a carbon material to at least one constitutional layer of the packaging material, or a separate heat dissipation layer containing a carbon material and a binder resin.

Hereinafter, the present invention will be explained in detail.

The present invention relates to packaging material for a battery including a deposited body consisting of an outermost layer, a barrier layer, and an innermost layer, wherein a carbon material is added to the constitutional layer, or a separate heat dissipation layer containing a carbon material and a binder resin is included to afford a slip property, flame resistance, printability, and the like as well as a heat dissipation property to the packaging material.

The carbon material that is used in the present invention is at least one selected from the group consisting of graphite, CNT (carbon nanotubes), SWNT (single-walled carbon nanotubes), graphene, and ACF (activated carbon fiber).

According to one embodiment, the heat dissipation layer is not added as a separate layer, and it may be prepared by adding a carbon material to at least one constitutional layer of the packaging material as an additive. In case the heat dissipation layer is added as a separate layer, it may be formed by coating, spraying, or roll pressing, and in case it is prepared by adding a carbon material to the existing layer, it may be added by compounding or mixing it together with the constitutional elements of the layer.

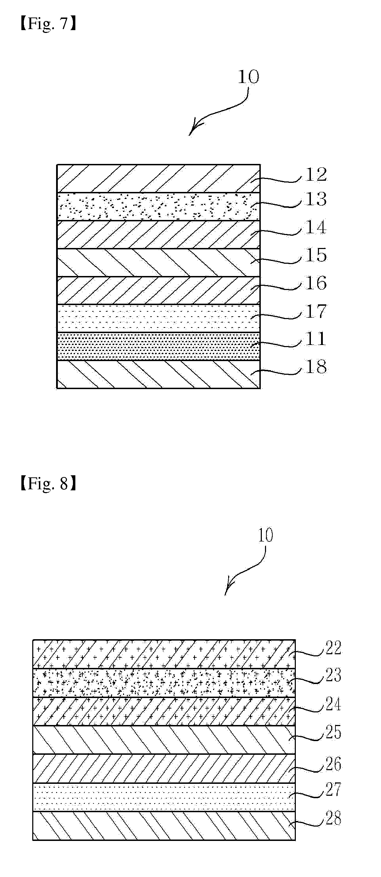

Referring to Fig. 8, the packaging material 10 for a battery according to the present invention has a structure including an outermost layer (22), an adhesive layer (23), a first chemically processed layer (24), a barrier layer (25), a second chemically processed layer (26), an electrolyte resistant layer (27), and an innermost layer (28) which are sequentially deposited, wherein a carbon material (a heat dissipation material) is added to the outermost layer (22), the adhesive layer (23), the first chemically processed layer (24), the barrier layer (25), the second chemically processed layer (26), the electrolyte resistant layer (27), and/or the innermost layer (28) to afford a heat dissipation property.

In this case, the carbon material may be included in the content of 1 to 40 wt%, and preferably 5 to 10 wt%, in each layer. If the content is less than 1 wt%, the heat transfer function may not be exhibited because a contact distance between carbon particles becomes far, and if the content is greater than 40 wt%, the intrinsic function of each layer may be lowered. Further, the contents that can minimize lowering of functions by a dispersion difference of carbon particles due to the properties of the carbon material, for example, MFR (melt flow rate), density, and the like, may be selected as a more preferable range.

According to one embodiment, the carbon material may be added to at least one constitutional layer of the packaging material to prepare a packaging material having the heat dissipation property. For example, it may be obtained by master batching the carbon material with a raw material used in each constitutional layer. The master batching is a method of preparing a raw material by highly concentrating additives and dispersing them in basic resin to solve the problems of using powder-type additives during extrusion, injection molding using a plastic resin such as PVC, PP, PE, PS, ABS, PC, and the like, namely, generation of poor dispersion due to lowering of kneadability. A film may be prepared by each preparation method (extrusion coating, cast film extrusion, blown film extrusion, and the like) using a prepared master batch raw material.

A heat dissipating adhesive layer may be prepared by combining raw materials of the adhesive to be used (a main agent and a curing agent) with the carbon material and a solvent, sufficiently dispersing them through mixing, and then coating on a base and drying them.

The chemically processed layers and the electrolyte resistant layer having the heat dissipation property may be prepared by the same method as the adhesive layer, through the processes of evenly dispersing the carbon material in the corresponding raw material, coating, and drying.

In case the heat dissipation layer is included as a separate layer in the packaging material, the binder resin included in the heat dissipation layer may be at least one selected from the group consisting of a phenol-based resin, a melamine-based resin, a polyurethane-based resin, an epoxy-based resin, a vinyl-based resin, a polyimide-based resin, a polyester-based resin, and a polyolefin-based resin. The thickness of the additional heat dissipation layer may be 1 to 10 µm, and more preferably 1 to 5 µm. It is preferably 1 to 10 µm so as to be suitable for heat dissipation performance and the properties of the product, and if it is less than 1 µm, heat dissipation performance may be lowered, while if it is greater than 10 µm, the layer tends to be broken when bent.

The additional heat dissipation layer may be formed on at least one position selected from the group consisting of the outermost layer of the packaging material for the battery, between the outermost layer and the barrier layer, and between the barrier layer and the innermost layer.

According to another embodiment, the packaging material for a battery may include an outermost layer, an adhesive layer, a barrier layer, an adhesive layer, and an innermost layer, which are sequentially deposited, and the additional heat dissipation layer may be formed on at least one position selected from the group consisting of the outermost layer, between the outermost layer and the adhesive layer, between the adhesive layer and the barrier layer, between the barrier layer and the adhesive layer, and between the adhesive layer and the innermost layer.

Further, the packaging material for a battery may include an outermost layer, an adhesive layer, a first chemically processed layer, a barrier layer, a second chemically processed layer, an electrolyte resistant layer, and an innermost layer which are sequentially deposited, and the separate heat dissipation layer may be formed on at least one position selected from the group consisting of the outermost layer, between the outermost layer and the adhesive layer, between the adhesive layer and the first chemically processed layer, between the first chemically processed layer and the barrier layer, between the barrier layer and the second chemically processed layer, between the second chemically processed layer and the electrolyte resistant layer, and between the electrolyte resistant layer and the innermost layer.

The chemically processed layer that contacts the barrier layer may be an aluminum oxide film layer formed by anodizing, an electroplated layer, an electroless plated layer, a chromate layer, a boehmite layer, or a phosphate-treated layer.

The aluminum oxide film layer formed by anodizing may be a porous aluminum oxide film layer formed on at least one surface of the barrier layer by anodizing, and preferably, it may have a thickness of 0.2 µm to 10 µm, have pores with a diameter of 1 nm to 1000 nm, and have a specific surface area of 0.5 m²/g to 100 m²/g. The anodizing may be conducted by various methods known in the art, including a sulfuric acid method, an oxalic acid method, a chromic acid method, a phosphoric acid method, a boric acid method, and the like. For example, the anodizing may be conducted at a current density of 0.5 A/dm² to 50 A/dm² using an electrolyte solution at about 10 °C to 30 °C including sulfuric acid, chromic acid, boric acid, oxalic acid, or a mixture thereof, and it may be conducted for about 5 seconds to 60 minutes. The thus treated oxide film layer is a porous oxide (Al₂O₃) layer, and improves electrical insulation, acid resistance, metal adhesion, abrasion resistance, and the like, as well as the intrinsic performance of the barrier layer.

The electrolyte resistant layer (27) is an adhesive resin that is easy to adhere between the barrier layer (25) and the innermost layer (28), and has chemical resistance to an electrolyte. Commonly, a polypropylene-based resin or a polyethylene-based resin, which are polyolefin-based resins, is used, and an acryl-based resin, a urethane-based resin, an epoxy-based, a phenol-based resin, and the like may be used. It is preferable that the electrolyte resistant layer (27) has a thickness of 1 to 10 µm in terms of excellent adhesion, flexibility of the coating layer, and productivity, and the coating may be conducted by spraying, roll coating, and the like.

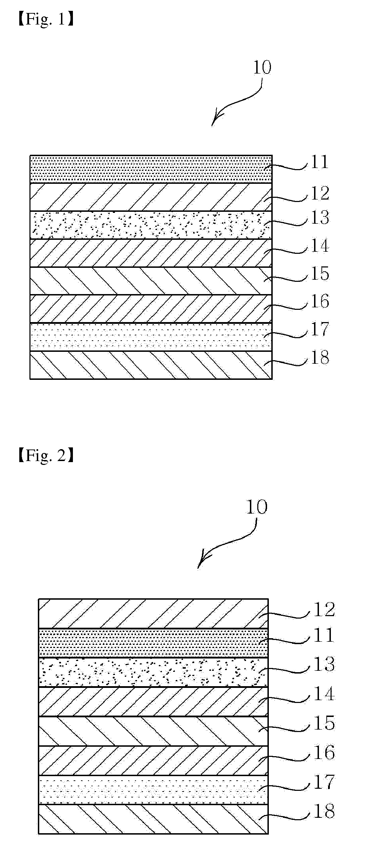

A specific embodiment of the packaging material 10 for a battery according to the present invention has a structure including a heat dissipation layer (11), an outermost layer (12), an adhesive layer (13), a first chemically processed layer (14), a barrier layer (15), a second chemically processed layer (16), an electrolyte resistant layer (17), and an innermost layer (18), which are sequentially deposited, as shown in Fig. 1.

Another embodiment of the packaging material 10 for a battery according to the present invention has a structure including an outermost layer (12), a heat dissipation layer (11), an adhesive layer (13), a first chemically processed layer (14), a barrier layer (15), a second chemically processed layer (16), an electrolyte resistant layer (17) and an innermost layer (18), which are sequentially deposited, as shown in Fig. 2.

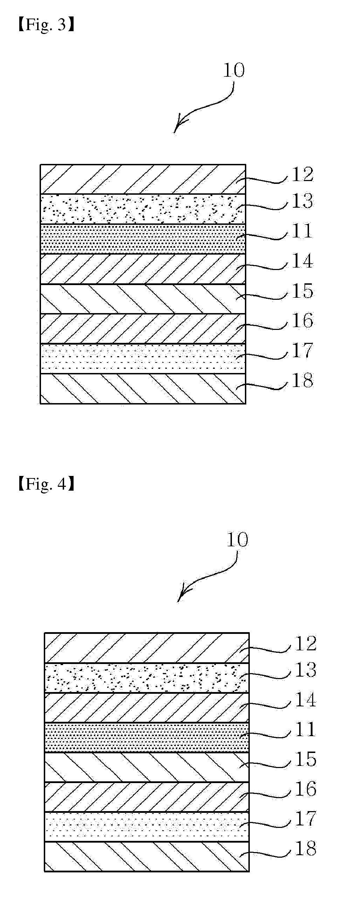

Yet another embodiment of the packaging material 10 for a battery according to the present invention has a structure including an outermost layer (12), an adhesive layer (13), a heat dissipation layer (11), a first chemically processed layer (14), a barrier layer (15), a second chemically processed layer (16), an electrolyte resistant layer (17) and an innermost layer (18), which are sequentially deposited, as shown in Fig. 3.

Yet another embodiment of the packaging material 10 for a battery according to the present invention has a structure including an outermost layer (12), an adhesive layer (13), a first chemically processed layer (14), a heat dissipation layer (11), a barrier layer (15), a second chemically processed layer (16), an electrolyte resistant layer (17) and an innermost layer (18), which are sequentially deposited, as shown in Fig. 4.

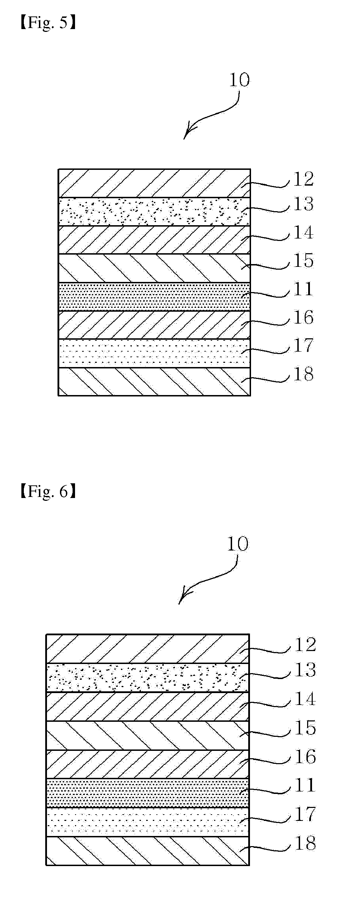

Yet another embodiment of the packaging material 10 for a battery according to the present invention has a structure including an outermost layer (12), an adhesive layer (13), a first chemically processed layer (14), a barrier layer (15), a heat dissipation layer (11), a second chemically processed layer (16), an electrolyte resistant layer (17) and an innermost layer (18), which are sequentially deposited, as shown in Fig. 5.

Yet another embodiment of the packaging material 10 for a battery according to the present invention has a structure including an outermost layer (12), an adhesive layer (13), a first chemically processed layer (14), a barrier layer (15), a second chemically processed layer (16), a heat dissipation layer (11), an electrolyte resistant layer (17) and an innermost layer (18), which are sequentially deposited, as shown in Fig. 6.

Yet another embodiment of the packaging material 10for a battery according to the present invention has a structure including an outermost layer (12), an adhesive layer (13), a first chemically processed layer (14), a barrier layer (15), a second chemically processed layer (16), an electrolyte resistant layer (17), a heat dissipation layer (11) and an innermost layer (18), which are sequentially deposited, as shown in Fig. 7

In the present invention, although the outermost layer (12), the barrier layer (15) and the innermost layer (18) may include all ingredients known in the field of packaging materials for a battery, the outermost layer (12) may preferably consist of a stretched polyester-based resin or stretched polyamide-based resin considering weather resistance, chemical resistance, formability, and the like.

Examples of the polyester-based resin may include polyethylene terephthalate (PET), polybutylene terephthalate (PBT), polyethylene naphthalate (PEN), polybutylene naphthalate (PBN), a copolymerized polyester, a polycarbonate (PC), and the like, and a single layer or multiple layers may be formed of at least one material selected from the group consisting of nylon 6, nylon 6.6, a copolymer of nylon 6 and nylon 6.6, nylon 6.10, polymetaxylylene adipamide (MXD) 6, and the like, as the biaxially oriented polyamide resin film. Further, a polyolefin-based resin with improved weather resistance, heat resistance, and chemical resistance may be used to form the layer.

The outermost layer (12) is adhered to the barrier layer (15) by dry lamination, extrusion lamination, and the like.

The thermoplastic resin of the innermost layer may include at least one selected from the group consisting of a polyolefin-based resin, a polyethylene-based resin, a polypropylene-based resin, a polybutylene-based resin, a polyester-based resin, a polyamide-based resin, a polycarbonate-based resin, a fluorinated resin, a silicon-based resin, an acryl-based resin, and a mixture thereof.

The barrier layer (15) is to prevent penetration of, particularly, vapor inside the lithium battery from the outside, and to afford resistance against pinholes, and it may be a layer of a metal or an inorganic compound, for example, a silicon oxide, alumina, and the like with a thickness of about 15 µm or more so as to stabilize processing quality (making it as a pouch, emboss forming), but as the barrier layer (15), an aluminum layer with a thickness of 15 µm to 200 µm is preferable.

As the barrier layer (15), an iron-containing aluminum compound is known to have a good insulation property and less generation of pin holes due to bending, and facilitates formation of a side wall when an outer body of an embossing type is formed. Since the formability of aluminum is dependent upon elongation, it is preferable to use a material with improved elongation formed by a physical method, a method of controlling added ingredients besides aluminum, and the like. Thus, as the barrier layer (15), a material having elongation of 15 % or more when the thickness is about 20 µm or more is preferably used.

In the present invention, the innermost layer (18) is selected from the group consisting of a polyolefin-based resin, a polyethylene-based resin, a polypropylene-based resin, a polybutylene-based resin, a polyester-based resin, a polyamide-based resin, a polycarbonate-based resin, a fluorinated resin, a silicon-based resin, an acryl-based resin, and a mixture thereof, and it may be formed of multiple layers consisting of each layer of the above ingredients. The layer may be formed by nano-extrusion, co-extrusion, tandem extrusion, lamination, and the like, and the thickness may preferably be 10 µm to 100 µm in terms of excellent heat sealing, electrical insulation, and barrier property. The innermost layer (18) may be formed as a composite layer using a film such as PET, a polyolefin, a nylon, and the like according to the function. Moreover, to improve adhesion of the barrier layer (15) and the innermost layer (18), ozone treatment, plasma treatment, gamma ray treatment, heat treatment, and the like may be conducted.

Meanwhile, as the adhesive layer (13), an adhesive with excellent heat resistance may preferably be used, and specifically, a polyurethane adhesive, preferably a urethane base two-component adhesive, is used. When a high temperature is generated from the internal/external environment of a battery, if an adhesive having low heat resistance is used, separation of the outermost layer (12) and the barrier layer (15) may be generated, which is not preferable. In general, the heat resistance of the adhesive should be such that layers may not be separated after about 5 minutes or more above about 150 °C. The layer may be formed by roll coating such as gravure coating, spraying, and the like, and the thickness is preferably 1 µm to 5 µm in terms of excellent adhesion and productivity.

Meanwhile, according to the present invention, by adding a slip agent to the heat dissipation layer, frictional force between films and between a film and a molding machine may be reduced to secure a slip property as well as a heat dissipation property. The slip agent may include a metallic soap, a fatty acid and derivatives thereof, a fatty acid amide, a higher alcohol, a fluorine-urethane polymer, silicon, a siloxane, a silane, a wax, a stearic acid monomer, and the like, but any material affording the slip property may be used without specific limitations. Further, by using aluminum with a good stretching property in the heat dissipation layer, a stretching property problem due to thick thickness forming may be solved to prepare packaging material with excellent formability. In addition, by using a polyester-based resin in the outermost layer, the packaging material with excellent resistance to chemicals such as organic solvents, acids, alkalis, electrolytes, and the like may be prepared.

### [ADVANTAGEOUS EFFECTS]

As explained, according to the present invention, when the internal temperature of a battery rapidly increases or it is exposed to a severe external environment such as heat, an excellent heat dissipation property is manifested so that an increase in the internal temperature of a battery may be primarily delayed and inhibited, thus securing battery stability and reliability. Moreover, the packaging material for a battery according to the present invention has excellent formability and chemical resistance.

### [BRIEF DESCRIPTION OF DRAWINGS]

Fig. 1 is a schematic diagram showing one embodiment of the deposited structure of a packaging material for a battery having a heat dissipation layer according to the present invention.
Fig. 2 is a schematic diagram showing another embodiment of the deposited structure of packaging material for a battery having a heat dissipation layer according to the present invention.
Fig. 3 is a schematic diagram showing still another embodiment of the deposited structure of a packaging material for a battery having a heat dissipation layer according to the present invention.
Fig. 4 is a schematic diagram showing still another embodiment of the deposited structure of a packaging material for a battery having heat dissipation function according to the present invention.
Fig. 5 is a schematic diagram showing still another embodiment of the deposited structure of a packaging material for a battery having a heat dissipation layer according to the present invention.
Fig. 6 is a schematic diagram showing still another embodiment of the deposited structure of a packaging material for a battery having a heat dissipation layer according to the present invention.
Fig. 7 is a schematic diagram showing still another embodiment of the deposited structure of a packaging material for a battery having a heat dissipation layer according to the present invention.
Fig. 8 is a schematic diagram showing one embodiment of the deposited structure of a packaging material for a battery containing a carbon material according to the present invention.

### [DETAILED DESCRIPTION OF THE EMBODIMENTS]

Hereinafter, the present invention will be explained in detail with reference to the following examples, but the scope of the invention is not limited thereto.

### <Example 1>

Packaging materials having a structure as shown in Fig. 1 including a heat dissipation layer respectively formed of a carbon material graphite, CNT (carbon nanotubes), SWNT (single-walled carbon nanotubes), graphene, and ACF (activated carbon fiber) were prepared. The thickness of the heat dissipation layer was about 5 µm, and the heat dissipation layer was formed on the outermost layer of the packaging material.

The outermost layer of the packaging material was formed of PET (about 6 µm)/O-nylon (about 15 µm), and as the adhesive layer, a urethane-based two-component type of adhesive was used with a thickness of about 3 µm. As the barrier layer, an aluminum oxide-containing soft aluminum foil that was prepared by forming aluminum oxide (Al₂O₃) film layers with a thickness of about 1 µm on both surfaces of aluminum by anodizing a degreased soft aluminum foil with a thickness of about 40 µm at a current density of 20 A/dm² for about 10 minutes using an electrolyte solution at about 20 °C containing sulfuric acid was used. As the electrolyte resistant layer, polypropylene resin (about 5 µm) was used, and as the innermost layer, an ethylene-containing propylene resin (about 80 µm) was used.

Each layer was deposited by roll coating and melt extrusion to prepare a packaging material for a battery.

The specific area of each packaging material was heated to about 90 °C, temperature values of the samples were measured over about 1 hour using a thermo-graphic camera, and the results are shown in the following Table 1.

**[Table 1]**

| Passed time | Graphite | CNT | SWNT | Graphene | ACF | No heat dissipation layer |
|---|---|---|---|---|---|---|
| 10 minutes | 90 °C | 90 °C | 90 °C | 90 °C | 90 °C | 90 °C |
| 20 minutes | 80 °C | 80 °C | 80 °C | 80 °C | 80 °C | 90 °C |
| 30 minutes | 80 °C | 80 °C | 80 °C | 80 °C | 80 °C | 90 °C |
| 40 minutes | 80 °C | 80 °C | 80 °C | 80 °C | 80 °C | 90 °C |
| 60 minutes | 80 °C | 80 °C | 80 °C | 80 °C | 80 °C | 90 °C |

| | | | | | | |
|---|---|---|---|---|---|---|
| *Graphite, CNT (carbon nanotubes), SWNT (single-walled carbon nanotubes), graphene, ACF (activated carbon fiber) | | | | | | |

### <Example 2>

The same process of Example 1 was conducted, except that the thickness of about 5 µm of the heat dissipation layer was changed as described in the following Table 2.

The heat dissipation performance according to the thickness of the heat dissipation layer was measured by heating the specific area of each packaging material to about 90 °C and measuring the temperature values of the samples over about 1 hour using a thermo-graphic camera, and the results are shown in the following Table 2.

**[Table 2]**

| Thickness of coating | Graphite | CNT | SWNT | Graphene | ACF |
|---|---|---|---|---|---|
| 11µm | 88 °C | 88 °C | 88 °C | 88 °C | 88 °C |
| 3 µm | 85 °C | 85 °C | 85 °C | 85 °C | 85 °C |
| 5 µm | 80 °C | 80 °C | 80 °C | 80 °C | 80 °C |
| 10 µm | 78 °C | 78 °C | 78 °C | 78 °C | 78 °C |

As shown in Tables 1 and 2, it was confirmed that each carbon material has heat dissipation performance, and particularly, as a result of increasing the thickness to 10 µm, heat dissipation performance is further increased. According to the present invention, when the internal temperature of a battery rapidly increases or it is exposed to a severe external environment such as heat, the heat dissipation property may be manifested so that an increase in the internal temperature of the battery may be primarily delayed and inhibited.

### <Example 3>

The same process of Example 1 was conducted, except for conducting chemical treatment by a boehmite process and a chromate process, instead of conducting anodizing on both sides of the barrier layer to form aluminum oxide film layers. Graphite was used as the carbon material, the thickness of the heat dissipation layer was about 5 µm, and the heat dissipation layer was formed on the outermost layer of the packaging material to prepare the packaging material having the structure as shown in Fig. 1.

Specifically, the boehmite process was conducted using a mixed solution of 7 % aluminum sulfate solution and 25 % ammonia water at a weight ratio of 6:1, so as to maintain pH 4. The temperature of the solution was maintained at 180 °C, and an aluminum foil was impregnated for 2 hours.

The chromate process was conducted by impregnating an aluminum foil using a trivalent chromate solution of pH 4 containing 10 % solid content at 50 °C for 10 minutes.

The heat dissipation of the packaging material was confirmed by heating the specific area of the outermost layer to about 90 °C, and measuring the temperature values of the samples over about 1 hour using a thermo-graphic camera, and the results are shown in the following Table 3.

For each specimen (5×5 cm) of the prepared packaging material, adhesion was tested by a peel test of the innermost layer and the aluminum, and the results are shown in the following Table 3.

**[Table 3]**

| Chemical treatment method | Adhesion (gf/15 mm) Nylon film/aluminum adhesion | Heat dissipation property | | |
|---|---|---|---|---|
| | | 0 hour | 0.5 hours | 1.0 hour |
| | | elapse | elapse | elapse |
| Non-treated | 650 | 90 °C | 80 °C | 80 °C |
| Anodizing of Example 1 | 800 | 90 °C | 80 °C | 80 °C |
| Boehmite process | 800 | 90 °C | 80 °C | 80 °C |
| Chromate process | 800 | 90 °C | 80 °C | 80 °C |

### <Example 4>

In this example, a constitutional layer having a heat dissipation property was prepared by directly adding a carbon material to each constitutional layer of the packaging material. The packaging material for a battery consisting of an outermost layer/an adhesive layer/a first chemically processed layer/a barrier layer/a second chemically processed layer/an electrolyte resistant layer/an innermost layer was prepared, wherein each constitutional layer was prepared with the same material as Example 1 to the same thickness.

As described in the following Table 3, the constitution of the heat dissipation layer was varied to prepare 3 kinds of packaging materials. Graphite was added to the constitutional layer containing the carbon material at a content of 5 wt% based on the main raw material of each layer.

The heat dissipating outermost layer and the innermost layer could be obtained by master-batching carbon materials with the resins used in each constitutional layer. Using the prepared master batch raw material, a film was prepared by each preparation method (extrusion coating, cast film extrusion, and blown film extrusion).

The heat dissipating adhesive layer was prepared by combining a urethane-based two-component type of adhesive, a carbon material, and a solvent at a weight ratio of 10:1:0.3:15, mixing them with a mechanical stirrer for 30 minutes to sufficiently disperse them, coating the mixture on a base by gravure coating, and hot air drying at 60 °C for 1 minute. The chemically processed layer or aluminum oxide film layer and the electrolyte resistant layer were prepared by the same method as the adhesive layer, by evenly dispersing the carbon material in corresponding raw material with a mechanical stirrer for 30 minutes, coating it by impregnation, and hot air drying at 170 °C for 1 minute. The electrolyte resistant layer was prepared by stirring and mixing the raw material resin and carbon material with a mechanical stirrer for 30 minutes, coating the mixture on a base by gravure coating, and hot air drying at 170 °C for 1 minute.

Heat dissipation was confirmed by heating the specific area of the outermost layer to about 90 °C and measuring temperature values of the samples over about 1 hour with a thermo-graphic camera, and the results are shown in the following Table 4.

**[Table 4]**

| Layer constitution | Packaging material A | Packaging material B | Packaging material C | Packaging material D |
|---|---|---|---|---|
| Outermost layer | O | O | x | O |
| Adhesive layer | O | O | x | x |
| First chemically processed layer (or aluminum oxide film layer) | O | O | x | X |
| barrier layer | O | X | x | x |
| Second chemically processed layer (or aluminum oxide film layer) | O | X | **O** | x |
| Electrolyte resistant layer | **O** | **X** | **O** | **x** |
| innermost layer | **O** | **X** | **O** | **x** |
| Heat dissipation property (0 hour elapse) | 90 °C | 90 °C | 90 °C | 90 °C |
| Heat dissipation property (0.5 hours elapse) | 85 °C | 85 °C | 90 °C | 87 °C |
| Heat dissipation property (1.0 hour elapse) | 80 °C | 80 °C | 90 °C | 85 °C |

### <Example 5>

A packaging material for a battery was prepared by the same method as the preparation of the packaging material D including the carbon material only in the outermost layer in Example 4, except that graphite was added at content of 0.5 wt%, 10 wt%, and 45 wt% to prepare the outermost layer and prepare a packaging material for a battery including the same, instead of using 5 wt% of graphite based on the raw material of the outermost layer in Example 4.

Heat dissipation was confirmed by heating the specific area of the outermost layer to about 90 °C, and measuring the temperature values of the samples over about 1 hour using a thermo-graphic camera, and the results are shown in the following Table 5.

**[Table 5]**

| | Graphite content 0.5 w/w% | Graphite content 5 w/w% | Graphite content 10w/w% | Graphite content 45w/w% |
|---|---|---|---|---|
| Heat dissipation property (0 hour elapse) | 90 °C | 90 °C | 90 °C | 90 °C |
| Heat dissipation property (0.5 hours elapse) | 88 °C | 87 °C | 85 °C | 85 °C |
| Heat dissipation property (1.0 hour elapse) | 88 °C | 85 °C | 80 °C | 80 °C |

### [Reference numerals]

| | | | |
|---|---|---|---|
| 10: | packaging material | 11: | heat dissipation layer |
| 12 and 22: | outermost layer | 13 and 23: | adhesive layer |
| 14 and 24: | first chemically processed layer | | |
| 15 and 25: | barrier layer | | |
| 16 and 26: | second chemically processed layer | | |
| 17 and 27: | electrolyte resistant layer | | |
| 18 and 28: | innermost layer | | |

## Claims

1. A pouch-type packaging material for a battery, comprising a heat resistant resin outermost layer, a barrier layer containing aluminum or an aluminum alloy, and a thermoplastic resin innermost layer,
wherein the packaging material for a battery comprises a heat dissipation layer that is prepared by adding a carbon material to at least one constitutional layer selected from the group consisting of an outermost layer, a barrier layer, and an innermost layer, or a separate heat dissipation layer containing a carbon material and a binder resin.

2. The pouch-type packaging material for a battery according to claim 1, wherein the carbon material is at least one selected from the group consisting of graphite, CNT (carbon nanotubes), SWNT (single-walled carbon nanotubes), graphene, and ACF (activated carbon fiber).

3. The pouch-type packaging material for a battery according to claim 1, wherein the carbon material is included in a content of 1 to 40 wt%, based on 100 wt% of a total composition of the heat dissipation layer prepared by adding the carbon material to the constitutional layer.

4. The pouch-type packaging material for a battery according to claim 1, wherein the separate heat dissipation layer is formed by coating, spraying, or roll pressing.

5. The pouch-type packaging material for a battery according to claim 1, wherein the binder resin of the separate heat dissipation layer is at least one selected from the group consisting of a phenol-based resin, a melamine-based resin, a polyurethane-based resin, an epoxy-based resin, a vinyl-based resin, a polyimide-based resin, a polyester-based resin, and a polyolefin-based resin.

6. The pouch-type packaging material for a battery according to claim 1, wherein the thickness of the separate heat dissipation layer is 1 µm to 10 µm.

7. The pouch-type packaging material for a battery according to claim 1, wherein the separate heat dissipation layer is formed on at least one position selected from the group consisting of on the outermost layer of the packaging material, between the outermost layer and the barrier layer, and between the barrier layer and the innermost layer.

8. The pouch-type packaging material for a battery according to claim 1, wherein the packaging material for a battery comprises an outermost layer, an adhesive layer, a barrier layer, an adhesive layer, and an innermost layer, which are sequentially deposited,
and the separate heat dissipation layer is formed on at least one position selected from the group consisting of on the outermost layer, between the outermost layer and the adhesive layer, between the adhesive layer and the barrier layer, between the barrier layer and the adhesive layer, and between the adhesive layer and the innermost layer.

9. The pouch-type packaging material for a battery according to claim 1, wherein the packaging material for a battery comprises an outermost layer, an adhesive layer, a first chemically processed layer, a barrier layer, a second chemically processed layer, an electrolyte resistant layer, and an innermost layer,
and the separate heat dissipation layer is formed on at least one position selected from the group consisting of on the outermost layer, between the outermost layer and the adhesive layer, between the adhesive layer and the first chemically processed layer, between the first chemically processed layer and the barrier layer, between the barrier layer and the second chemically processed layer, between the second chemically processed layer and the electrolyte resistant layer, and between the electrolyte resistant layer and the innermost layer.

10. The pouch-type packaging material for a battery according to claim 9, wherein the chemically processed layer is an aluminum oxide film layer formed by anodizing, an electroplated layer, an electroless plated layer, a chromate layer, a boehmite layer, or a phosphate treated layer.

11. The pouch-type packaging material for a battery according to claim 10, wherein the aluminum oxide film layer is formed by anodizing the surface of the barrier layer to a thickness of 0.2 µm to 10 µm, and has pores with a particle diameter of 1 nm to 1000 nm.

12. The pouch-type packaging material for a battery according to claim 1, wherein the heat resistant resin of the outermost layer includes a stretched polyester-based resin, a stretched polyamide-based resin, or a mixed resin thereof.

13. The pouch-type packaging material for a battery according to claim 1, wherein the thermoplastic resin of the innermost layer includes at least one selected from the group consisting of a polyolefin-based resin, a polyethylene-based resin, a polypropylene-based resin, a polybutylene-based resin, a polyester-based resin, a polyamide-based resin, a polycarbonate-based resin, a fluorinated resin, a silicon-based resin, a acryl-based resin, and a mixture thereof.

14. The pouch-type packaging material for a battery according to claim 9, wherein the electrolyte resistant layer has a thickness of 1 µm to 10 µm, and includes a polyolefin-based resin.

15. The pouch-type packaging material for a battery according to claim 1, wherein if the barrier layer has a thickness of 15 µm to 200 µm, it has elongation of 15 % or more.
